# EUROPÄISCHE PATENTSCHRIFT

(11) **EP 3 253 986 B1**
(45) Veröffentlichungstag und Bekanntmachung des Hinweises auf die Patenterteilung: **05.05.2021**
(21) Anmeldenummer: 16711514.6
(22) Anmeldetag: 05.02.2016
(51) Int. Cl.: F16D 69/00, F16D 69/04, F16D 65/04

(54) **TRÄGERPLATTE FÜR EINEN BREMSBELAG UND MIT SOLCHEN TRÄGERPLATTEN MITSAMT REIBBELÄGEN AUSGERÜSTETE BREMSE**
SUPPORT PLATE FOR A BRAKE LINING AND BRAKE EQUIPPED WITH SUCH A SUPPORT PLATE TOGETHER WITH FRICTION LININGS
PLAQUETTE SUPPORT POUR UNE GARNITURE DE FREIN ET FREIN MUNI DE TELLES PLAQUETTES SUPPORT AVEC DES GARNITURES DE FRICTION

(30) Priorität: 07.02.2015 DE 102015001425
(43) Veröffentlichungstag der Anmeldung: 13.12.2017
(73) Patentinhaber: Gienanth GmbH, 67304 Eisenberg (DE)
(72) Erfinder: HECKER, Andreas, 67308 Zellertal (DE); LAHR, Alexander, 67294 Stetten (DE); LOHR, Wolfgang, 67305 Ramsen (DE)
(74) Vertreter: Patentanwälte Bernhardt / Wolff Partnerschaft mbB
(86) Internationale Anmeldenummer: PCT/DE2016/000041
(87) Internationale Veröffentlichungsnummer: WO 2016/124171

(56) Entgegenhaltungen:
- EP-A1- 2 083 187
- EP-A2- 1 717 475
- DE-A1-102005 046 351
- DE-U1- 29 802 031

## Beschreibung

Die Erfindung betrifft flächige, insbesondere mehreckige Trägerplatten für einen Bremsbelag von Scheibenbremsen und mit solchen Trägerplatten mitsamt deren Bremsbelägen ausgerüstete Scheibenbremsen-Anlagen.

Bei derartigen Trägerplatten ist die eine flächige Seite zur Aufnahme des Reibbelages vorgesehen und auf der anderen Seite, also auf der der Belagträgerseite abgewandten Seite der Trägerplatte, sind ein oder zwei Auflagebereiche für die Mittel einer Zustelleinrichtung, wie Kolben oder Stellspindel, vorgesehen.

EP 2 083 187 offenbart eine Scheibenbremse für ein Nutzfahrzeug und einen Bremsbelag für eine Scheibenbremse. DE 10 2005 046 351 offenbart einen Bremsbelag, insbesondere für eine Scheibenbremse eines Nutzfahrzeugs.

Bei durch die EP 0 659 242 B1, DE 103 02 334 A1 und DE 696 02 602 T2 bekanntgewordenen Scheibenbremsen sind diese Auflagebereiche als über den plattenförmigen Grundkörper vorstehende Bereiche, auch als Druckstücke bezeichnet, ausgebildet. Derartige Belagträgerplatten haben jedoch ein hohes Gewicht und beanspruchen in Achsrichtung der Scheibenbremse erheblichen Bauraum. Diese Nachteile lassen sich durch eine ebene Ausbildung der der Belagträgerseite abgewandten Seitenfläche, also ohne die über den plattenförmigen Grundkörper vorstehende Erhebungen, verringern, wie dies die DE 195 32 019 C1, die DE 10 2006 004 550 A1, die AT 277311 und die DE 298 02 031 U1 zeigen. Dabei weisen die Platten der beiden letztgenannten Schriften auf der der Belagträgerseite abgewandten Seite Strukturierungen auf.

Bei solchen Belagträgerplatten ist Gussmetall aus Eisen (DE '602), Graugusswerkstoff GGG oder GGL (DE '019), die Ausbildung als Gussteil (DE '550), Stahl, Gusseisen oder Leichtmetall- Legierung (AT '311), die Herstellung als Gusskörper, Gussteil (DE '031), vorgeschlagen.

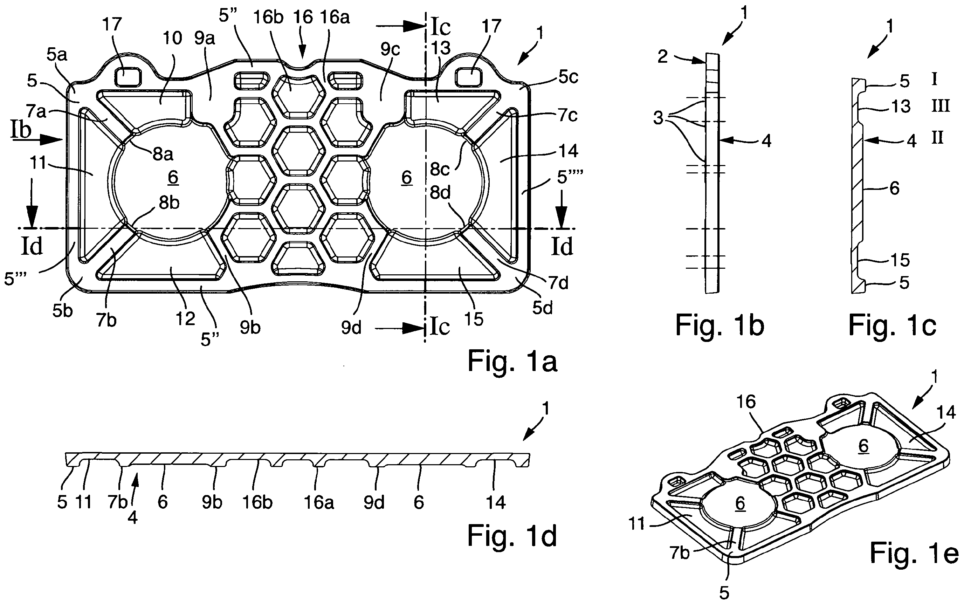

Der vorliegenden Erfindung lag die Aufgabe zugrunde, solche Belagträgerplatten zu verbessern, insbesondere das Gewicht weiter zu verringern, die Herstellkosten zu senken, ohne die Festigkeit, etwa die Steifigkeit, zu verringern, sondern diese, als auch das Schwingungs- und Geräuschverhalten, noch weiter zu verbessern. Dies wird dadurch erzielt, dass die Belagträgerplatte aus einem zumindest im Wesentlichen ebenen Plattenkörper besteht, der auf der der Belagträgerseite abgekehrten Seite von einem zumindest im Wesentlichen geschlossenen umlaufenden Randbereich auf einem ersten Höhenniveau umgeben ist, welches somit auf dieser Seite der Belagträgerplatte die oberste Höhe bzw. die größte Dicke derselben darstellt und die Belagträgerplatte mindestens einen zumindest annähernd kreisartigen Auflagebereich für ein Element, wie eine Stellspindel, einen Kolben oder dergleichen einer Zustelleinrichtung aufweist auf einem zweiten, niedrigeren Niveau als der Randbereich und dass zwischen dem oder den Auflagebereichen und wenigstens einzelnen der seitlichen Randbereiche Vertiefungen vorgesehen sind, auf einem dritten, tiefer als die Auflagebereiche liegenden Niveau (Fig. 1-4). Diese Vertiefungen umgeben also die Auflagebereiche wenigstens teilweise, wobei vorteilhafterweise weiterhin zwischen den Vertiefungen liegende rippenartige Verbindungsbereiche mit vorzugsweise wall- bzw. dammartigem Querschnitt auf einem höheren Niveau vorgesehen sind, vorzugsweise auf dem Niveau des Randbereiches und wobei diese Verbindungsbereiche vom Randbereich ausgehen und dann über Übergangsbereiche in die Auflagebereiche gewissermaßen einfließen können (Fig. 1-3). In vielen Fällen ist es zweckmäßig, wenn die Verbindungsbereiche zumindest von einzelnen der Eckpunkte der Trägerplatte ausgehen und auf die Auflageflächen zu gerichtet sind und über vor den Auflageflächen vorgesehene Übergangsbereiche in diese einmünden, indem diese Übergangsbereiche vom ersten Niveau des Randes auf das zweite Niveau des oder der Auflagebereiche abfallen (Fig.1-3). Die Verbindungsbereiche können aber auch zumindest annähernd auf dem zweiten Niveau der Auflagebereiche verlaufen und über Übergangsbereiche auf das Niveau des Randbereiches ansteigen.

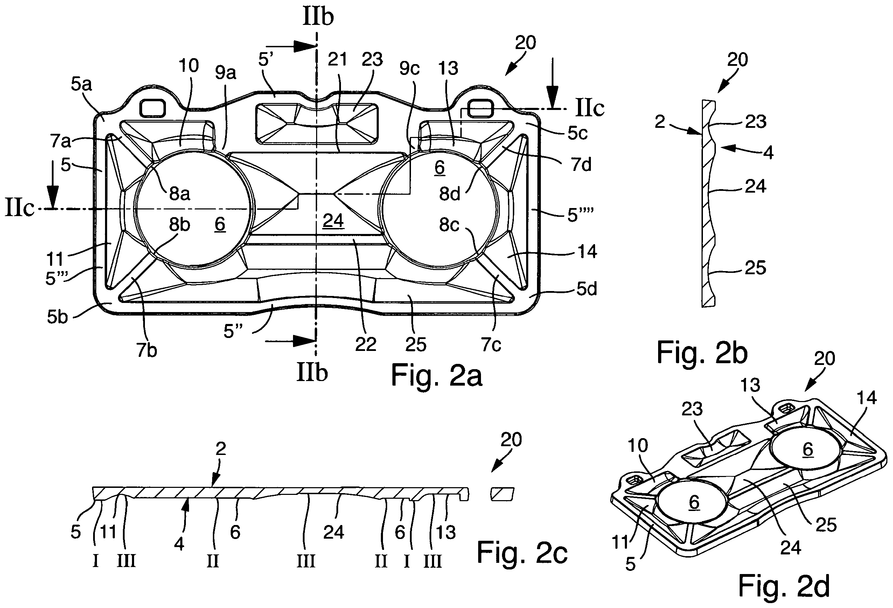

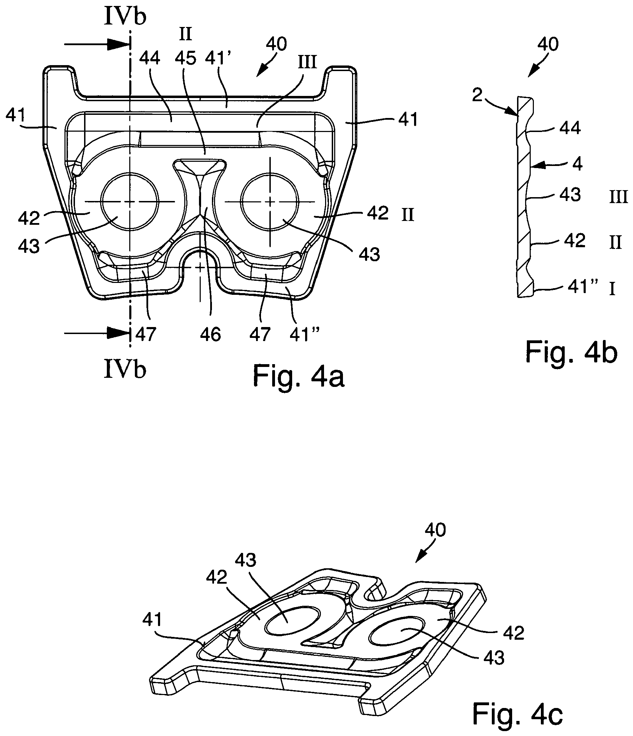

Ist mehr als ein Auflagebereich auf einer Trägerplatte vorgesehen, kann es zweckmäßig sein, wenn zwischen den einzelnen Auflagebereichen wenigstens ein Verbindungsbereich verläuft, der direkt, auch gerade (Fig. 2, 4), oder gewunden oder mäanderförmig (Fig. 1), von Auflagebereich zu Auflagebereich verlaufen kann (Fig. 2, 4). Ein solcher Verbindungsbereich kann auch tangentenartig von einem der Auflagebereiche ausgehen und auch tangentenartig in den anderen einmünden (Fig. 4). Zwischen einem solchen Verbindungsbereich und dem benachbarten Randbereich ist wenigstens eine kanalartige Vertiefung vorgesehen, die vorzugsweise bis auf das dritte Niveau abfällt (Fig. 2, 4). Zwischen den Auflagebereichen können aber auch mehrere Verbindungsbereiche verlaufen, wobei zwischen benachbarten Verbindungsbereichen eine ebenfalls bis zum dritten Niveau reichende Vertiefung vorgesehen sein kann (Fig. 2). Der oder die Verbindungsbereich(e) kann bzw. können dabei zumindest annähernd auf dem ersten Niveau des Randbereiches verlaufen und vorteilhafterweise kurz vor den Auflagebereichen über Übergangsbereiche in die Auflagebereiche abfallen. Die tiefer als das zweite Niveau der Auflagebereiche liegenden Vertiefungen fallen dabei zweckmäßigerweise alle zumindest annähernd auf dasselbe, dritte Niveau ab (Fig.1-3). In einzelnen Fällen kann es aber auch zweckmäßig sein, wenn der oder die Verbindungsbereich(e) zwischen zwei Auflagebereichen auf dem zweiten Niveau, also auf der Höhe der Auflagen verläuft bzw. verlaufen (Fig. 4). Auch diese Verbindungsbereiche sind vorteilhafterweise mit einem damm- bzw. wallartigen Querschnitt versehen.

Als vorteilhaft hat sich herausgestellt, dem zwischen den zum Beispiel zwei Auflagebereichen befindlichen Zwischenraum und/oder zwischen wenigstens einzelnen der Randbereiche und den Auflagen eine wabenartige Struktur vorzusehen, wobei die Wabenwände die damm- bzw. wallartigen Verbindungsbereiche bilden und die Wabenböden die Vertiefungen (Fig. 1). Die wabenförmigen Wände können dabei auf dem Niveau des Randbereiches verlaufen und die dazwischen liegenden Wabenböden zumindest annähernd auf einem dritten Niveau, wie dem der genannten Vertiefungen (Fig. 1).

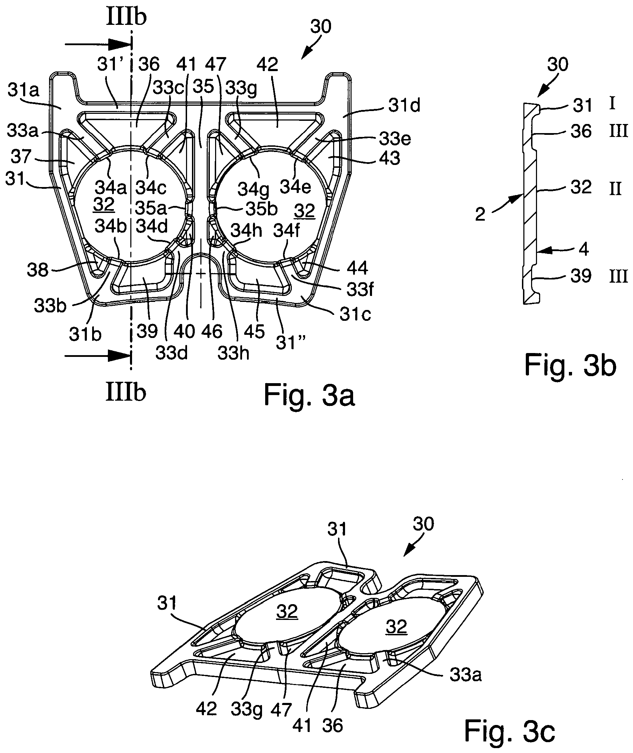

Eine Trägerplatte mit einer Mehrzahl von Auflagen, zum Beispiel zwei, kann aber auch derart ausgestaltet werden, dass zwischen den beiden Auflagen wenigstens ein den Abstand zwischen den einander gegenüberliegenden Längen-Randbereichen überbrückender Verbindungsbereich vorgesehen ist, der wiederum auf dem ersten Niveau der Randbereiche (Fig. 3) oder aber, was für manche Fälle ausreichen mag, auf dem zweiten Niveau der Auflagen verlaufen kann.

Eine derartige flächige wie mehreckige, zum Beispiel viereckige und gemäß der Erfindung sowohl auf der Belagträgerseite als auch auf der der Belagträgerseite abgewandten Seite zumindest im Wesentlichen eben gestaltete Belagträgerplatte mit wenigstens einer Auflagefläche für ein Betätigungselement auf der der Belagträgerseite abgewandten Seite kann vorteilhafterweise derart ausgebildet sein, dass diese insgesamt eine fachwerkartige Struktur aufweist, mit einem die Trägerplatte umgebenden, rahmenartig ausgebildeten und über das Niveau der Auflagefläche(n) vorstehenden, zumindest im wesentlichen geschlossenen Randbereich, innerhalb desselben vorgesehenem(n) Auflagebereich(en) und Vertiefungen als Gefach und den/die Auflagebereich(e) mit dem Rahmen verbindenden, sowie zwischen einzelnen Vertiefungen verlaufenden und zwischen benachbarten Vertiefungen vorgesehenen Stäben, Balken oder Streben als dem Skelett. Dabei ist es vorteilhaft, wenn die einen zweckmäßigerweise einen damm- bzw. wallartigen Querschnitt aufweisenden Stäbe beziehungsweise Balken oder Streben zumindest annähernd auf dem Niveau des Randbereiches, wenigstens aber zumindest annähernd auf dem der Auflagen verlaufen, das Gefach, die Auflagebereiche und die Vertiefungen tiefer als die Randbereiche und die Vertiefungen wiederum tiefer als die Auflagebereiche (Fig. 1-3).

Bei einer bereits oben erwähnten Trägerplatte mit mehr als einem Auflagebereich, vorzugsweise zwei Auflagebereichen auf der der Belagträgerseite abgewandten Seite und mit zumindest im Wesentlichen geschlossenem umlaufenden Randbereich, der zumindest über wesentliche Teile auf einem höheren Niveau liegt als die Auflagebereiche und die zwei Auflagebereiche tangentenartig verbindenden Verbindungsbereichen, kann es aber auch vorteilhaft sein, wenn die kanalartige Vertiefung zwischen diesem tangentenartig verlaufenden Verbindungsbereich und dem diesem benachbarten Längen-Randbereich von dem einen bis zu dem anderen Breiten-Randbereich durchgehend verläuft (Fig. 4).

Weiterhin ist es in einem solchen Fall vorteilhaft, zwischen den Auflagebereichen wenigstens eine von dem tangentialen Verbindungsbereich bis zumindest annähernd zu dem diesem abgekehrten Längen-Randbereich verlaufende Vertiefung vorzusehen. Vorteilhaft ist es weiterhin, wenn zwischen den Auflagebereichen und dem anderen Längenbereich ebenfalls wenigstens eine Vertiefung vorgesehen ist (Fig. 4).

Bei einer zuletzt beschriebenen Ausgestaltung, aber auch bei den zuvor beschriebenen kann es weiterhin vorteilhaft sein, wenn die Auflagebereiche kreisringförmig ausgebildet sind mit einer Vertiefung im Bereich des inneren Kreises, so dass hier weiter Gewicht gespart werden kann (Fig. 4).

Durch die Ausgestaltung der Belagträgerplatte mit unterschiedlichen Niveau* von umlaufendem und den Bremsbelag umfangsmäßig einschließenden Randbereich als oberstem Niveau, dem oder den Auflagebereichen auf einem zweiten, tieferen Niveau und Vertiefungen auf einem tiefer als die Auflagen liegenden Niveau, sowie die Anordnung von Verbindungsbereichen mit damm- bzw. wallartigen Querschnitten mit breiterer Dammsohle als die Dammkrone zwischen Randbereich und Auflage(n) und/oder zwischen den Auflagen und/oder zwischen zwei Randbereichen auf dem zweiten und/oder dem dritten Niveau kann die Wandstärke insgesamt und damit der Materialeinsatz gegenüber den bisher bekannten Belagträgerplatten deutlich reduziert werden bei optimaler Festigkeit und Biegesteifigkeit. Es sind Materialstärken in der Größenordnung von ca. 5 mm im Randbereich, also dem ersten Niveau, von ca. 4 mm im Bereich der Auflagebereiche, also dem zweiten Niveau und von ca. 2,5 mm, dem dritten Niveau im Bereich der Vertiefungen erzielbar, sodass solche Belagträgerplatten, die zwei Auflagebereiche aufweisen, sogar bei PKW's und deren Abwandlungen einsetzbar sind. Als Werkstoff wird vorzugsweise GJS verwendet, wobei es vorteilhaft ist, insbesondere zur Erhöhung der Schwingungsdämpfung, aber auch zur Beeinflussung der Zugfestigkeit, der Zähigkeit, der Temperaturleitfähigkeit, der Temperaturwechselbeständigkeit, der Bearbeitbarkeit und der Vergießbarkeit, einen bestimmten Anteil Vermikulargrafit im Gefüge vorzusehen. Abhängig von Belastung und Bauteilgeometrie kann hier ein Vermikulargrafitanteil von 5-95% zur Anwendung kommen. Bei geforderter höherer Schwingungsdämpfung kann der Vermikulargrafitanteil im Gefüge höher eingestellt werden, nämlich zwischen 40 und 95%. Eine typische Eisenlegierung für den vorliegenden Anwendungsfall enthält: 3,35-3,5% C, 3,0-3,2% Si und 0,01-0,02%Mg. Ein Kohlenstoffäquivalent von CE= 4,xx - 4,yy ist einzustellen. CE = C+ (Si + P)/3. Zur Erstarrungslenkung ist ein Gießstrahlimpfmittel auf Si-Basis zwischen 0,05 und 0,4%, vorzugsweise 0,2% vorgesehen. Eine Belagträgerplatte mit der beschriebenen Geometrie und Materialzusammensetzung kann endkonturnah gegossen werden, sodass auch die Bearbeitungskosten der Trägerplatte deutlich reduziert werden können.

Anhand der Figuren 1a bis 4c sei die Erfindung näher erläutert:
Figur 1a zeigt eine Belagträgerplatte mit Blickrichtung auf die der Belagträgerseite abgewandte Seite,
Figur 1b eine Ansicht aus der Blickrichtung des Pfeiles Ib der Figur 1a,
Figur 1c einen Schnitt gemäß der Linie Ic/Ic,
Figur 1d einen Schnitt gemäß der Linie Id/Id,
Figur 1e eine perspektivische Darstellung,
Figur 2a zeigt ebenfalls eine Ansicht der der Belagträgerseite abgewandten Seite einer weiteren Ausführungsform einer erfindungsgemäßen Belagträgerplatte,
Figur 2b einen Schnitt gemäß der Linie IIb/IIb der Figur 2a,
Figur 2c einen Schnitt gemäß der Linie IIc/IIc,
Figur 2d eine perspektivische Ansicht,
Figur 3a zeigt eine andere Ausführungsform einer erfindungsgemäßen Belagträgerplatte, ebenfalls in Ansicht von der der Belagträgerseite abgewandten Seite,
Figur 3b einen Schnitt gemäß der Linie IIIb/IIIb der Figur 3a,
Figur 3c eine perspektivische Ansicht,
Figur 4a eine weitere Ausführungsform gemäß der Erfindung einer Belagträgerplatte, in Ansicht von der der Belagträgerseite abgewandten Seite,
Figur 4b einen Schnitt gemäß der Linie IVb/IVb der Figur IVa und
Figur 4c eine perspektivische Ansicht der Figur 4a.

Die flächige mehreckige, zumindest annähernd rechteckige Trägerplatte 1 der Figuren 1a bis 1e ist, wie insbesondere im Zusammenhang mit Figur 1b zu erkennen ist, zumindest im Wesentlichen eben. Sie hat lediglich auf der Belagträgerseite 2 geringfügig über die Oberfläche vorstehende Nocken 3 zur Befestigung, insbesondere zum Aufschweißen von Belagnieten. Auf der der Belagträgerseite 2 abgewandten Seite 4 weist die Belagträgerplatte einen geschlossenen umlaufenden Randbereich 5 auf einem ersten Niveau I auf und beabstandet zu diesem zwei Auflagebereiche 6 für je einen Kolben oder eine Stellspindel oder dergleichen einer Bremsbetätigung. Diese liegen auf einem zweiten, nämlich niedrigerem Niveau II als der Randbereich 5. Von den Eckbereichen 5a - 5d des Randbereiches gehen Verbindungsbereiche 7a bis 7d auf dem Höhenniveau I des Randes 5 auf die Auflagebereiche 6 zu und über Übergangsbereiche 8a bis 8d in die Auflagebereiche 6 über. Weitere, von dem Randbereich 5 und auf dessen Höhenniveau auf die Auflagebereiche 6 zu gerichtete und in diese übergehende Verbindungsbereiche sind mit 9a bis 9d bezeichnet. Auch die den Auflagebereichen zugewandten Verbindungsbereiche 9a bis 9d gehen, wie die Verbindungsbereiche 7a bis 7d, über eigene Übergangsbereiche in die Auflagebereiche 6 über. Zwischen den Verbindungsbereichen 7a und 7b sowie 7c und 7d sind Vertiefungen 11 sowie 14 vorgesehen und zwischen den Verbindungsbereichen 9a und 7a, 7b und 9b, 9c und 7c und 7d und 9d die Vertiefungen 10, 12, 13 und 15. Diese Vertiefungen befinden sich auf dem gegenüber den Auflagen niedrigeren Niveau III. Zwischen den beiden Auflagebereichen 6 einerseits und den zwischen den Auflagen befindlichen Randbereichen andererseits ist ein wabenartiger Bereich 16 vorgesehen mit den Wabenwänden 16a als Verbindungsbereiche und den Wabenböden 16b. Die Wabenwände 16a verlaufen auf dem Höhenniveau des Randbereiches 5, wobei auch die Verbindungsbereiche 9b und 9d Bestandteile des Wabengebildes sind. Die Wabenböden 16b befinden sich auf dem Niveau der Vertiefungen 10-15. Die Verbindungsbereiche 7 und 9 haben damm- bzw. wallartigen Querschnitt und gehen über Übergangsbereiche in die Niveaux der Auflagebereiche und der Vertiefungen über. Aufnahmebereiche für Haltefedern sind mit 17 bezeichnet.

Die Belagträgerplatte 20 der Figuren 2a bis 2d ist ebenfalls zumindest annähernd rechteckig ausgeführt und besitzt auf der der Belagträgerseite 2 abgewandten Seite 4 einen umlaufenden Rand 5 auf erstem Niveau und Auflagebereiche 6 auf einem gegenüber dem ersten Niveau des Randbereiches 5 tieferliegenden zweiten Niveau II. Von den Eckbereichen 5a bis 5d gehen Verbindungsbereiche die 7a bis 7d, die auch als Verstärkungsrippen bezeichnet werden können, auf die Auflagebereiche 6 zu und über entsprechende Übergänge 8a bis 8d in diese über. Weitere Verbindungsbereiche vom Randbereich 5 zu den Auflagebereichen 6 sind mit 9a und 9c bezeichnet. Zwischen den Verbindungsbereichen 9a, 7a und 7b sind Vertiefungen 10 und 11 auf dem Niveau III vorgesehen und zwischen den Verbindungsbereiche 9c, 7d und 7c Vertiefungen 13, 14. Zwischen den beiden Auflagen 6 verlaufen geradlinige Verbindungsbereiche 21, 22, die ebenso wie die anderen Verbindungsbereiche der übrigen Figuren auch als Streben, Verstärkungsrippen, Stege od. dgl. bezeichnet werden können, zumindest annähernd auf dem Niveau des Randbereiches und gehen über entsprechende Übergangsbereiche in die tiefer liegenden Auflagen 6 über. Zwischen dem Verbindungsbereich 21 und dem diesem zugekehrten Längen-Randbereich 5' ist eine Vertiefung 23 vorgesehen, zwischen den beiden Verbindungsbereichen 21 und 22 eine Vertiefung 24 und zwischen dem Verbindungsbereich 22 und dem anderen Längen-Randbereich 5" ist eine Vertiefung 25 vorgesehen, die sich zwischen den von den Eckbereichen 5b und 5d ausgehenden Verbindungsstreben 7b und 7c erstreckt, also praktisch vom Randbereich 5''' bis zum anderen 5"", auf einem Niveau tiefer als die Auflagen 6.

Die Belagträgerplatte 30 der Figuren 3a bis 3c ist ebenfalls mehreckig und flach ausgebildet, nämlich zumindest annähernd rechteckig und besitzt auf der der Belagträgerseite 2 abgewandten Seite 4 einen Randbereich 31 auf einem höheren Niveau I als die Auflagebereiche 32 (II). Von den Eckbereichen 31a bis 31d des Randbereiches gehen Verbindungsbereiche 33a bis 33g über entsprechende Übergangsbereiche 34a bis 34g in die auf dem niedrigeren Niveau II vorgesehenen Auflagebereiche 32 über. Ein weiterer Verbindungsbereich 35 verläuft vom einen Längen-Randbereich 31' bis zum anderen Längen-Randbereich 31" zwischen den beiden Auflagebereichen 32 hindurch, auf dem Niveau des Randbereiches. Übergangsbereiche 35a und 35b verbinden die beiden Auflageflächen 32 mit dem Verbindungsbereich 35.

Zwischen den Verbindungsbereichen beziehungsweise den Randbereichen und den Auflagebereichen 32 sind Vertiefungen 36 bis 47 auf einem tiefer liegenden Niveau (III) vorgesehen als die Auflagebereiche 32.

Die Belagträgerplatten der Figuren 1a bis 3c weisen eine fachwerkartige Struktur auf mit dem Randbereich 5 als Rahmen, den Verbindungsbereichen 7a-7b, 9a-9d, 16a, 21, 22, 33a-33h, 35 als Streben, Ständer oder Stiele, Riegel, Bänder, Kreuze, Balken od. dgl. und den Vertiefungen 10-15, 16b, 23-25, 36-47 bzw. 6, 32 (die Auflagebereiche) als Gefach bzw. als Fenster.

Die Belagträgerplatte 40 gemäß den Figuren 4a bis 4c weist auf der der Belagträgerseite 2 abgekehrten Seite 4 einen umlaufenden Randbereich 41 auf einem ersten Niveau I auf. Die Auflagebereiche 42 sind hier kreisringförmig ausgebildet und auf einem tieferen Niveau II vorgesehen als der Randbereich 41. Der Bereich 43 des kleineren Kreises des kreisringförmigen Auflagebereiches 42 befindet sich auf einem tieferen Niveau III als der kreisringförmige Bereich 42. Eine Vertiefung 44 ist zwischen einem die beiden Auflagen 42 verbindenden und in diese tangential einlaufenden Verbindungsbereich 45 und dem Randbereich 41' angeordnet, zumindest annähernd auf dem Niveau III des kleineren Kreises 43. Zwischen den beiden Auflagebereichen 43 ist eine Vertiefung 46 vorgesehen, deren Grund sich auf dem Niveau III der Vertiefung 44 befinden kann. Weitere Vertiefungen 47 sind zwischen dem Randbereich 41" und den kreisringförmigen Bereichen 42 vorgesehen. Vorteilhaft kann es weiterhin sein, wenn in wenigstens einem der Bereiche: Nocken für Niete, umlaufender Randbereich, Eckbereiche, Längen- Randbereiche, Breiten- Randbereich, Auflagebereich, Verbindungsbereiche, Übergangsbereiche, Vertiefungen, wabenartige Bereiche, Wabenwände, Wabenböden, Aufnahmebereiche, Verbindungsbereiche Streben, Stäbe, kleiner Kreis; Vertiefung, tangentialer Verbindungsbereich weitere Vertiefungen oder sogar Durchbrüche vorgesehen sind, die insbesondere der Gewichtsreduzierung dienen können.

## Patentansprüche

1. Flächige, insbesondere mehreckige Trägerplatte (1, 20, 30, 40) für einen Bremsbelag für eine Scheibenbremse, wobei die im Wesentlichen ebene Trägerplatte auf der der Belagträgerseite (2) abgewandten Seite (4) einen zumindest im Wesentlichen geschlossenen umlaufenden Randbereich (5, 31, 41) auf einem ersten Höhenniveau (I) aufweist, mindestens einen, zumindest annähernd kreisförmigen Auflagebereich (6, 32, 42) für ein Element, wie eine Stellspindel, einen Kolben oder dergleichen einer Zustelleinrichtung auf einem zweiten, niedrigeren Niveau (II) und dass zwischen dem (den) Auflagebereich(en) und wenigstens einzelnen von seitlichen Randbereichen Vertiefungen (10-15, 36-47) vorgesehen sind auf einem tiefer als die Auflagebereiche liegenden, dritten Niveau (III).

2. Trägerplatte nach Anspruch 1, **dadurch gekennzeichnet, dass** zwischen einzelnen Vertiefungen des dritten Niveaus wall- bzw. dammartige Verbindungsbereiche (7a-d, 33a-h) verlaufen mit einer Höhe von zumindest annähernd dem ersten oder zweiten Niveau.

3. Trägerplatte nach Anspruch 1 oder 2, **dadurch gekennzeichnet, dass** zumindest benachbart von wenigstens einzelnen der Eckbereiche auf den(die) Auflagebereich(e) zu verlaufende Verbindungsbereiche ausgehen.

4. Trägerplatte nach einem der Ansprüche 1 bis 3, **dadurch gekennzeichnet, dass** die Verbindungsbereiche in den(die) Auflagebereich(e) übergehen.

5. Trägerplatte nach Anspruch 3 oder 4, **dadurch gekennzeichnet, dass** die Verbindungsbereiche zumindest annähernd auf dem Niveau des Randbereiches verlaufen.

6. Trägerplatte nach einem der Ansprüche 2 bis 5, **dadurch gekennzeichnet, dass** die Verbindungsbereiche über unmittelbar vor den Auflagebereichen vorgesehene, das erste zum zweiten Niveau überbrückende Übergangsbereiche (8a-d, 34a-h) in die Auflagenbereiche einmünden.

7. Trägerplatte mit mehr als einem Auflagebereich nach einem der Ansprüche 1 bis 6, **dadurch gekennzeichnet, dass** zwischen den Auflagebereichen zumindest ein Verbindungsbereich (16a, 21, 22, 35) verläuft auf einer zumindest annähernd dem ersten bis zumindest annähernd dem zweiten Niveau entsprechenden Höhe mit wenigstens einer zwischen diesen angeordneten Vertiefung (16b, 24).

8. Trägerplatte nach Anspruch 7, **dadurch gekennzeichnet, dass** zwischen dem zwischen den Auflagebereichen verlaufenden Verbindungsbereich und dem diesem benachbarten Randbereich eine Vertiefung (23) verläuft.

9. Trägerplatte nach einem der Ansprüche 6 oder 7, **dadurch gekennzeichnet, dass** zwischen zwei Auflagebereichen mindestens zwei Verbindungsbereiche vorgesehen sind mit einer dazwischen vorgesehenen, bis zur Tiefe des dritten Niveau reichenden Vertiefung.

10. Trägerplatte nach einem der Ansprüche 7 bis 9, mit wenigstens einem zwischen den Auflagebereichen verlaufendem Verbindungsbereich (45), **dadurch gekennzeichnet, dass** dieser tangentenartig in wenigstens einen der Auflagebereiche einmündet.

11. Trägerplatte nach einem der Ansprüche 1 bis 10, **dadurch gekennzeichnet, dass** in dem zwischen den zum Beispiel zwei Auflagebereichen befindlichen Zwischenraum und/oder zwischen wenigstens einzelnen der Randbereiche und den Auflagen eine wabenartige Struktur (16) vorgesehen ist.

12. Trägerplatte nach Anspruch 10, **dadurch gekennzeichnet, dass** die Wabenwände damm- bzw. wallartige Verbindungsbereiche (16a) bilden und die Wabenböden die Vertiefungen (16b).

13. Trägerplatte nach Anspruch 10 oder 11, **dadurch gekennzeichnet, dass** die wabenförmigen Wände auf einer zumindest annähernd dem ersten bis zumindest annähernd dem zweiten Niveau entsprechenden Höhe verlaufen und die dazwischen liegenden Wabenböden zumindest annähernd auf einem dritten Niveau.

14. Trägerplatte nach einem der Ansprüche 1 bis 13, **dadurch gekennzeichnet, dass** die Auflagebereiche kreisringförmig ausgebildet sind mit einer bis zumindest annähernd auf das dritte Niveau reichenden Vertiefung im Bereich des kleinen Kreises (43).

15. Flächige, mehreckige, wie viereckige und im Wesentlichen eben gestaltete Belagträgerplatte (1, 20, 30) mit wenigstens einer Auflagefläche (6, 32) für ein Betätigungselement auf der der Belagträgerseite (2) abgewandten Seite (4), die eine fachwerkartige Struktur aufweist, mit einem die Trägerplatte umgebenden, rahmenartig ausgebildeten und über das Niveau (II) der Auflagefläche(n) vorstehenden, zumindest im wesentlichen geschlossenen Randbereich (5, 31), wobei der oder die innerhalb desselben vorgesehene(n) Auflagebereich(e) und Vertiefungen (10-15, 36-47) das Gefach bilden und die die Auflagebereich(e) mit dem Rahmen verbindenden, sowie die zwischen einzelnen Vertiefungen verlaufenden und zwischen benachbarten Vertiefungen vorgesehenen damm- bzw. wallartigen Verbindungsbereiche (7a-d, 33a-h) die Stäbe, Balken oder Streben das Skelett des Fachwerks und dass die Stäbe beziehungsweise Balken oder Streben einen damm- bzw. wallartigen Querschnitt aufweisen und zumindest annähernd auf dem Niveau (I) des Randbereiches, wenigstens aber zumindest annähernd auf dem der Auflagen verlaufen, das Gefach, die Auflagebereiche und die Vertiefungen tiefer als die Randbereiche und die Vertiefungen wiederum tiefer als die Auflagebereiche.

16. Trägerplatte nach einem der vorhergehenden Ansprüche, **dadurch gekennzeichnet, dass** sie aus Gusseisen, nämlich aus GGV hergestellt ist, einen Vermikulargrafitanteil von 5-95%, vorzugsweise zwischen 40 und 95% aufweist, die Eisenlegierung vorzugsweise 3,35-3,5% C, 3,0-3,2% Si und 0,01-0,02%Mg enthält, weiterhin bevorzugt ein Kohlenstoffäquivalent von CE= 4,xx - 4,yy vorhanden ist, vorzugsweise von CE = C+ (Si + P)/3 und weiters bevorzugt ein Gießstrahlimpfmittel auf Si-Basis zwischen 0,05 und 0,4%, vorzugsweise von zumindest annähernd 0,2% zur Anwendung kommt.

## Claims

1. Flat, in particular polygonal carrier plate (1, 20, 30, 40) for a brake lining for a disc brake, the substantially planar carrier plate having, on the side (4) which faces away from the lining carrier side (2), an at least substantially closed peripheral edge region (5, 31, 41) at a first vertical level (I), at least one, at least approximately circular bearing region (6, 32, 42) for an element, such as an actuating spindle, a piston or the like of a brake application device at a second, lower level (II), and depressions (10-15, 36-47) being provided between the bearing region/regions and at least individual ones of lateral edge regions, at a third level (III) which lies lower than the bearing regions.

2. Carrier plate according to Claim 1, **characterized in that** wall-like or dam-like connecting regions (7a-d, 33a-h) run with a height of at least approximately the first or second level between individual depressions of the third level.

3. Carrier plate according to Claim 1 or 2, **characterized in that** connecting regions which run towards the bearing region/regions extend at least adjacently from at least individual ones of the corner regions.

4. Carrier plate according to one of Claims 1 to 3, **characterized in that** the connecting regions merge into the bearing region/regions.

5. Carrier plate according to Claim 3 or 4, **characterized in that** the connecting regions run at least approximately at the level of the edge region.

6. Carrier plate according to one of Claims 2 to 5, **characterized in that** the connecting regions open into the bearing regions via transition regions (8a-d, 34a-h) which are provided directly in front of the bearing regions and provide a bridge from the first to the second level.

7. Carrier plate with more than one bearing region according to one of Claims 1 to 6, **characterized in that** at least one connecting region (16a, 21, 22, 35) runs between the bearing regions, with at least one depression (16b, 24) which is arranged between them, at a height which corresponds at least approximately to from the first level as far as at least approximately the second level.

8. Carrier plate according to Claim 7, **characterized in that** a depression (23) runs between the connecting region, which runs between the bearing regions, and the edge region which is adjacent with respect to the said connecting region.

9. Carrier plate according to either of Claims 6 and 7, **characterized in that** at least two connecting regions are provided between two bearing regions, with a depression which is provided in between and reaches as far as the depth of the third level.

10. Carrier plate according to one of Claims 7 to 9, with at least one connecting region (45) which runs between the bearing regions, **characterized in that** the said connecting region (45) opens tangentially into at least one of the bearing regions.

11. Carrier plate according to one of Claims 1 to 10, **characterized in that** a honeycomb-like structure (16) is provided in the intermediate space, which is situated between the, for example, two bearing regions, and/or between at least individual ones of the edge regions and the supports.

12. Carrier plate according to Claim 10, **characterized in that** the honeycomb walls form dam-like or wall-like connecting regions (16a), and the honeycomb bottoms form the depressions (16b).

13. Carrier plate according to Claim 10 or 11, **characterized in that** the honeycomb-shaped walls run at a height which corresponds at least approximately to from the first level as far as at least approximately the second level, and the honeycomb bottoms which lie in between run at least approximately at a third level.

14. Carrier plate according to one of Claims 1 to 13, **characterized in that** the bearing regions are of circular annular configuration with a depression which reaches as far as at least approximately to the third level in the region of the small circle (43).

15. Flat, polygonal, such as square, lining carrier plate (1, 20, 30) of substantially planar design with at least one bearing face (6, 32) for an actuating element on the side (4) which faces away from the lining carrier side (2) and has a framework-like structure, with an at least substantially closed edge region (5, 31) which surrounds the carrier plate, is of frame-like configuration and projects beyond the level (II) of the bearing face/faces, the depressions (10-15, 36-47) and bearing region/regions which are provided within the said edge region (5, 31) forming the bays, and the slats, beams or struts connecting the bearing region/regions to the frame, and the dam-like or wall-like connecting regions (7a-d, 33a-h) which run between individual depressions and are provided between adjacent depressions forming the skeleton of the framework, and the slats or beams or struts having a dam-like or wall-like cross section and running at least approximately at the level (I) of the edge region, but at least approximately at the level of the supports, and the bays, the bearing regions and the depressions being lower than the edge regions, and the depressions in turn being lower than the bearing regions.

16. Carrier plate according to one of the preceding claims, **characterized in that** it is produced from cast iron, namely from CGI, has a vermicular graphite percentage of 5-95%, preferably of between 40 and 95%, the iron alloy preferably comprises 3.35-3.5% C, 3.0-3.2% Si and 0.01-0.02% Mg, further preferably there is a carbon equivalent of CE = 4.xx - 4.yy, preferably of CE = C + (Si + P)/3 and further preferably a casting inoculant on an Si basis between 0.05 and 0.4%, preferably of at least approximately 0.2%, is used.

## Revendications

1. Plaque porteuse (1, 20, 30, 40) surfacique, en particulier polygonale, pour une garniture de frein pour un frein à disque, la plaque porteuse sensiblement plane présentant, sur le côté (4) détourné du côté support de garniture (2), une zone de bord périphérique (5, 31, 41) au moins sensiblement fermée, à un premier niveau de hauteur (I), au moins une zone de support (6, 32, 42) au moins approximativement circulaire pour un élément, tel qu'une broche de réglage, un piston ou similaire, d'un dispositif d'approche, à un deuxième niveau plus bas (II), et des cavités (10 - 15, 36 - 47) étant prévues entre la ou les zones de support et au moins certaines des zones de bord latérales, à un troisième niveau (III) qui est plus bas que celui des zones de support.

2. Plaque porteuse selon la revendication 1,
**caractérisée en ce que** des zones de liaison (7a - d, 33a - h) en forme de rempart ou de talus s'étendent entre certaines cavités du troisième niveau et présentent une hauteur qui correspond au moins approximativement au premier ou au deuxième niveau.

3. Plaque porteuse selon la revendication 1 ou 2,
**caractérisée en ce que** des zones de liaison partant au moins au voisinage d'au moins certaines des zones de coin s'étendent vers la ou les zones de support.

4. Plaque porteuse selon l'une des revendications 1 à 3,
**caractérisée en ce que** les zones de liaison se transforment en la ou les zones de support.

5. Plaque porteuse selon la revendication 3 ou 4,
**caractérisée en ce que** les zones de liaison s'étendent au moins approximativement au niveau de la zone de bord.

6. Plaque porteuse selon l'une des revendications 2 à 5,
**caractérisée en ce que** les zones de liaison débouchent dans les zones de support par l'intermédiaire de zones de transition (8a - d, 34a - h) prévues directement devant les zones de support et reliant le premier au deuxième niveau.

7. Plaque porteuse selon l'une des revendications 1 à 6,
comportant plus d'une zone de support,
**caractérisée en ce qu'**au moins une zone de liaison (16a, 21, 22, 35) s'étend entre les zones de support à une hauteur correspondant au moins approximativement au premier niveau jusqu'à au moins approximativement le deuxième niveau, en présentant au moins une cavité (16b, 24) disposée entre eux.

8. Plaque porteuse selon la revendication 7,
**caractérisée en ce qu'**une cavité (23) s'étend entre la zone de liaison, s'étendant entre les zones de support, et la zone de bord adjacente à ladite zone.

9. Plaque porteuse selon l'une des revendications 6 ou 7,
**caractérisée en ce qu'**au moins deux zones de liaison sont prévues entre deux zones de support, présentant une cavité prévue entre elles et s'étendant jusqu'à la profondeur du troisième niveau.

10. Plaque porteuse selon l'une des revendications 7 à 9,
comportant au moins une zone de liaison (45) s'étendant entre les zones de support,
**caractérisée en ce que** ladite zone débouche à la manière d'une tangente dans au moins l'une des zones de support.

11. Plaque porteuse selon l'une des revendications 1 à 10,
**caractérisée en ce qu'**une structure (16) en nids d'abeille est prévue entre l'espace intermédiaire situé, par exemple, entre deux zones de support et/ou entre au moins certaines des zones de bord et les supports.

12. Plaque porteuse selon la revendication 10,
**caractérisée en ce que** les parois des nids d'abeille forment des zones de liaison (16a) en forme de rempart ou de talus, et les fonds des nids d'abeille forment les cavités (16b).

13. Plaque porteuse selon la revendication 10 ou 11,
**caractérisée en ce que** les parois en nids d'abeilles s'étendent à une hauteur correspondant au moins approximativement au premier niveau jusqu'à au moins approximativement le deuxième niveau, et les fonds des nids d'abeilles situés entre elles s'étendent au moins approximativement à un troisième niveau.

14. Plaque porteuse selon l'une des revendications 1 à 13,
**caractérisée en ce que** les zones de support sont réalisées en forme d'anneau circulaire ayant, dans la région du petit cercle (43), une cavité s'étendant au moins approximativement jusqu'au troisième niveau.

15. Plaque porteuse de garniture (1, 20, 30) surfacique, polygonale, telle que quadrangulaire, et sensiblement plane, présentant au moins une surface de support (6, 32) pour un élément d'actionnement sur le côté (4) détourné du côté support de garniture (2), qui présente une structure en treillis, comportant une zone de bord (5, 31) au moins sensiblement fermée qui entoure la plaque porteuse, est réalisée en forme de cadre et fait saillie au-dessus du niveau (II) de la ou des surfaces de support,
dans laquelle la ou les zones de support et les cavités (10 - 15, 36 - 47), prévue(s) à l'intérieur de ladite zone de bord, forment le casier, et les barres, poutres ou entretoises qui relient la ou les zones de support au cadre, ainsi que les zones de liaison (7a - d, 33a - h) en forme de rempart ou de talus qui s'étendant entre certaines cavités et qui sont prévues entre des cavités adjacentes, forment l'ossature de la structure en treillis, et
les barres ou poutres ou entretoises ont une section transversale en forme de rempart ou de talus et s'étendent au moins approximativement au niveau (I) de la zone de bord, cependant au moins approximativement à celui des supports, le casier, les zones de support et les cavités s'étendant plus bas que les zones de bord, et les cavités s'étendant à leur tour plus bas que les zones de support.

16. Plaque porteuse selon l'une des revendications précédentes, **caractérisée en ce qu'**elle est réalisée en fonte, en particulier en fonte GV, présentant une teneur en graphite vermiculaire de 5 à 95 %, de préférence comprise entre 40 et 95 %, l'alliage de fer contenant de préférence 3,35 à 3,5 % de C, 3,0 à 3,2 % de Si et 0,01 à 0,02 % de Mg, de préférence présentant en outre un équivalent carbone de CE = 4,xx à 4,yy, de préférence CE = C + (Si + P)/3, en utilisant de façon particulièrement préférée un inoculant pour jet de coulée à base de Si entre 0,05 et 0,4 %, de préférence au moins environ 0,2 %.
